Europäisches Patentamt

(19) European Patent Office

Office européen des brevets

(11) Numéro de publication : **0 023 689**
**B1**

(12) **FASCICULE DE BREVET EUROPÉEN**

(45) Date de publication du fascicule du brevet :
28.12.83

(51) Int. Cl.³ : **H 04 Q 11/04, H 04 M 3/24**

(21) Numéro de dépôt : **80104422.3**

(22) Date de dépôt : **28.07.80**

(54) Dispositif logique de prétraitement d'alarmes.

(30) Priorité : **03.08.79 FR 7919946**

(43) Date de publication de la demande :
**11.02.81 Bulletin 81/06**

(45) Mention de la délivrance du brevet :
**28.12.83 Bulletin 83/52**

(84) Etats contractants désignés :
**BE CH DE GB IT LI NL SE**

(56) Documents cités :
FR-A- 2 356 335
FR-A- 2 406 917
GB-A- 1 544 389
GB-A- 1 544 390
SYSTEMS TECHNOLOGY, no. 32, septembre 1979,
pages 5-19 Liverpool, G.B. A.S. PHILIP: "The System
X digital switching subsystem (DSS)"
AUTOMATISME, vol. 21, no. 6/7, juin/juillet 1976,
pages 224-231 Paris, FR. SALLE: "La défense des
systèmes "télécom" gérés par ordinateur"
THE BELL SYSTEM TECHNICAL JOURNAL, vol. 56,
no. 7, septembre 1977, pages 1057-1097 New York,
U.S.A. BOYLE et al.: "No. 4 ESS: Transmission Switching Interfaces and Toll Terminal Equipment"
EUROCON '77, Conference proceedings on communications, mai 1977, pages 2.8.2.1 à 2.8.2.8 Venice, IT.
BOVO et al.: "Integration of supervision and maintenance for proteo system trunk network"
COLLOQUE INTERNATIONAL DE COMMUTATION-
INTERNATIONAL SWITCHING SYMPOSIUM, mai
1979, pages 186-192, session 13C Paris, FR. PAUL:
"Localisation des pannes de composants dans le
système E 10 B"
TELEPHONE ENGINEER AND MANAGEMENT, vol.
80, no. 15, août 1976, pages 85, 86, 88, 89 Wheaton,
U.S.A. MATSON: "Status/alarm system improves CO
off-hour performance"

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **Renaudin, Yves**
**Bâtiment 7 La Montgolfière**
**F-78380 Bougival (FR)**
Inventeur : **Bordon, Daniel**
**Bâtiment 23 Résidence Tournemire Les Ulis**
**F-91440 Bures S/Yvette (FR)**

(74) Mandataire : **Weinmiller, Jürgen et al**
**Zeppelinstrasse 63**
**D-8000 München 80 (DE)**

# 0 023 689

## Dispositif logique de prétraitement d'alarmes

L'invention concerne un dispositif logique de prétraitement d'alarmes applicable notamment à un système téléphonique à réseau de commutation numérique à commande centralisée.

Dans les gros systèmes à commande centralisée par calculateur(s), la transmission des alarmes doit nécessairement emprunter un chemin différent de celui parcouru par les informations et les ordres fonctionnels. En effet, dans le cas d'un défaut vital sur une des parties du système (défaut d'alimentation par exemple), les liaisons fonctionnelles sont dans l'impossibilité de transmettre des informations sur la nature et la localisation de ce défaut.

D'autre part, les alarmes pouvant provenir d'un grand nombre d'équipements décentralisés, leur transmission par les liaisons fonctionnelles occasionnent rapidement un engorgement desdites liaisons, aussi on prévoit des liaisons spécialisées, notamment des liaisons multiplexes ainsi qu'il est montré dans le brevet français n° 2 356 335.

Cependant, bien que le(s) calculateur(s) du central puisse accéder à tous les organes par ces liaisons spécialisées sans passer par la hiérarchie des liaisons fonctionnelles, celui-ci doit fournir un travail non négligeable d'analyse pour déterminer la nature des alarmes et connaître leur degré de priorité, ce qui diminue d'autant sa rapidité d'intervention contre la propagation des défauts et diminue en proportion sa capacité de traitement des informations fonctionnelles.

Le dispositif de prétraitement d'alarmes selon l'invention est destiné à un autocommutateur comportant une commande centralisée par calculateurs et des organes répartis en modules de défense dotés chacun de moyens pour émission d'alarmes et dont au moins certains englobent un commutateur temporel ou spatial de voies temporelles MIC, les alarmes étant affectées chacune d'une catégorie dépendant de son type, de l'organe émetteur et éventuellement des moyens de regroupement qui la transmette à la commande centralisée, via une logique d'échange.

Selon l'invention, le dispositif de prétraitement comporte :

— des moyens d'émission d'alarmes sous forme multiplexée et sous forme continue dans chaque module de défense, ces moyens alimentant respectivement une liaison dite continue et une liaison dite multiplexe propres à ce module,

— des moyens de prétraitement des alarmes constitués par au moins deux circuits identiques de prétraitement des alarmes aptes à assurer chacun un regroupement catégoriel d'alarmes, une confirmation et un classement par priorité en vue d'une transmission des alarmes reçues vers l'un ou l'autre des calculateurs via la logique d'échange qui leur est associée,

— des moyens redondants de transmission d'alarmes constitués par au moins un réseau de liaisons continues et multiplexes qui sont multiplexées les unes et les autres de manière à relier au moins en double chaque module de défense à la commande centralisée, via les circuits de prétraitement et les logiques d'échange.

L'invention, ses caractéristiques et ses avantages seront mis en évidence par la description ci-après d'un exemple de réalisation de l'invention donné en regard des dessins annexés dans lequel :

la figure 1 situe l'ensemble de prétraitement d'alarmes selon l'invention dans l'environnement nécessaire au contrôle du réseau de connexion pour multiplex du central téléphonique

la figure 2 donne un schéma plus détaillé du réseau d'alarmes (RLA), lesdites alarmes accédant directement aux dispositifs de prétraitement ou via des circuits d'accès

la figure 3 représente les circuits d'émission d'alarmes d'un module de défense

la figure 4 représente un circuit d'accès regroupant les liaisons de transmission des alarmes d'une pluralité de modules de défense

la figure 5 représente une mémoire directrice (MDI) des logiques de prétraitement (LPT) d'un dispositif de prétraitement des alarmes (DPa) et une mémoire (MAP) des appels desdites logiques pour les états confirmés d'alarmes, et leurs liaisons en mode de travail cyclique

la figure 6 représente les circuits de la première partie (PT1) d'une des cartes logiques de prétraitement d'un dispositif de prétraitement des alarmes (DPa)

la figure 7 représente des circuits de la seconde partie de ladite carte (PT2) de prétraitement

la figure 8 représente les liaisons des logiques de prétraitement, de la mémoire directrice et de la mémoire d'appels avec la logique centrale et son interface.

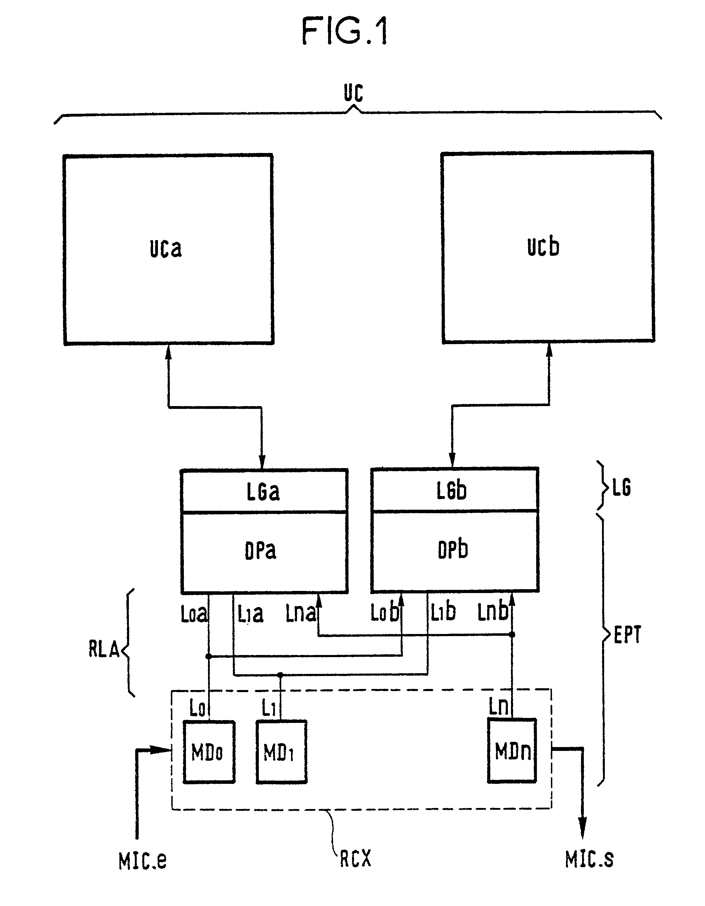

Tel que représenté sur la figure 1 le dispositif de prétraitement EPT est relié à une unité de commande UC constituée de deux calculateurs UCa, UCb via une logique centrale LG constituée de deux logiques LGa, LGb.

Un réseau de connexion RCX de voies MIC (modulation par impulsions codées) entrantes et sortantes est organisé en n modules périphériques de détection, dits de défense MD0, MD1, ... MDn, chaque module étant relié à deux circuits de prétraitement d'alarmes DPa, DPb par une paire de liaisons bifilaires L0, L1, ... Ln transmettant chacune en sortie dudit module les alarmes éventuelles issues des voies MIC.

Les circuits de prétraitement d'alarmes DPa, DPb sont reliés respectivement à un calculateur UCa, UCb via leur logique centrale LGa, LGb.

Le brassage des liaisons reliant les modules de défense aux dispositifs de prétraitement forme le

2

réseau des liaisons d'alarmes RLA.

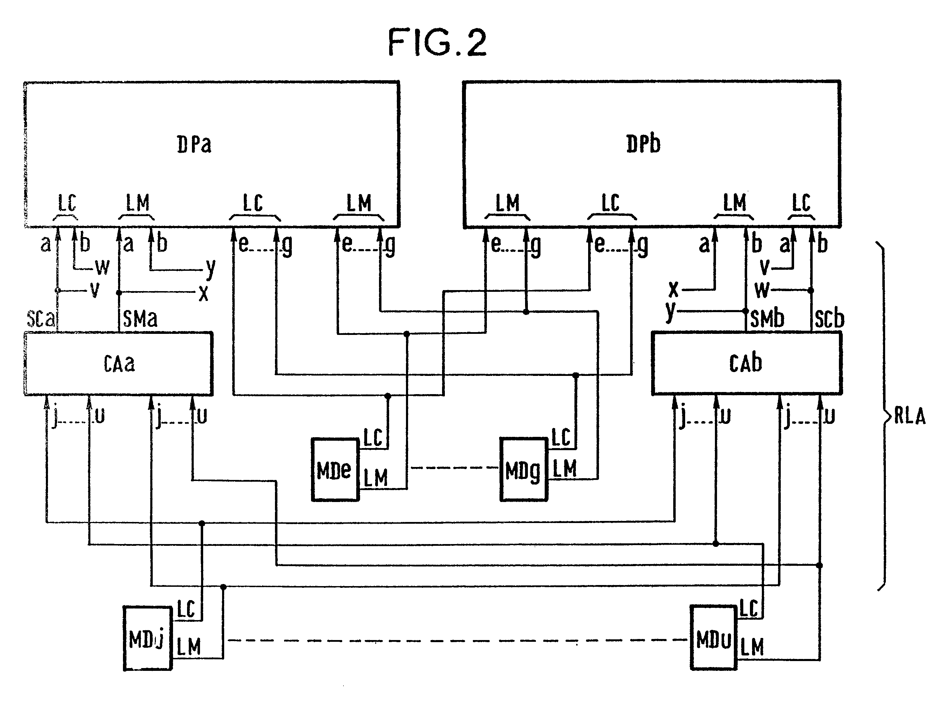

Comme représenté sur la figure 2 chaque module de défense comporte deux types de liaisons de transmission d'alarmes des organes qu'il contrôle :

— une liaison bifilaire dite continue LC transmettant d'une manière continue l'état d'un contact donnant l'indication d'une panne d'alimentation du module. La fermeture du contact d'un détecteur indique par bouclage de la liaison l'apparition de l'alarme « hors tension » dudit module

— une liaison bifilaire dite multiplex LM transmettant les états échantillonnés des alarmes de module à partir d'un circuit multiplex.

Une absence d'alarme est signifiée par la transmission cyclique d'un élément binaire d'état logique 0 et une alarme est signifiée par la transmission cyclique d'un élément binaire d'état logique 1. En pratique, les éléments binaires porteurs ou non d'alarmes selon leur état logique se succèdent toutes les microsecondes, une liaison de regroupement des multiplex d'émission pouvant ainsi transmettre jusqu'à environ 2 000 informations différentes entre deux tops de synchronisation délivrés par la base de temps toutes les deux millisecondes.

Les alarmes et informations transmises par les liaisons multiplex sont :

— les alarmes « faute base de temps » des modules de défense,

— les informations de parité permettant de détecter des redondances à la réception (fautes redondances),

— les alarmes provenant de la défectuosité des organes par exemple des commutateurs temporels et spatiaux du réseau de connexion.

Le réseau des liaisons d'alarmes est développé de façon plus détaillée figure 2. Il comporte :

— pour les modules de défense tels que MDe à MDg peu nombreux par bâti, des liaisons directes continues LCe à LCg et multiplexées LMe à LMg reliant lesdits modules aux circuits de prétraitement d'alarmes DPa et DPb,

— pour les modules de défense tels que MDJ à MDu nombreux par bâti, les liaisons continues LCj à LCu et multiplexées LMj à LMu desdits modules sont regroupées sur une paire de circuits d'accès CAa, CAb aux circuits de prétraitement DPa, DPb respectifs.

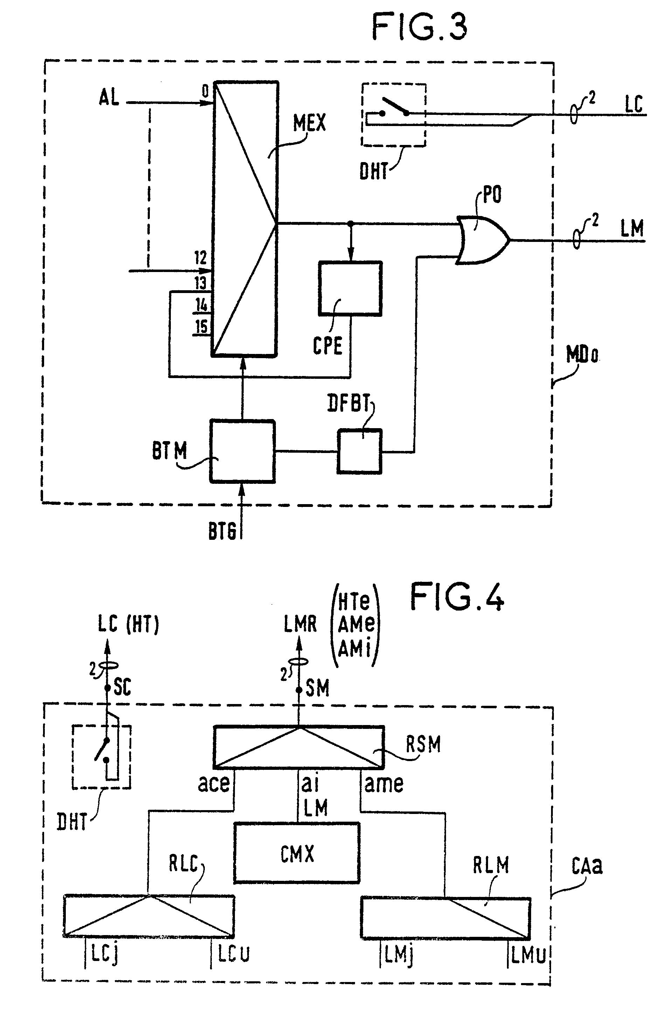

Les circuits internes d'un module de défense MD permettant la transmission d'alarmes sur une liaison multiplexée LM sont détaillés figure 3. Les modules de défense, les circuits d'accès et les circuits de prétraitement DPa, DPb comportent chacun une base de temps BT de 6 mégahertz pilotée par une base de temps générale BTG tripliquée délivrant des signaux de 6 mégahertz synchronisés toutes les 2 millisecondes.

Les alarmes AL du module de défense MD sont reliées aux entrées d'au moins un multiplexeur d'émission d'alarmes MEX à 16 entrées 0 à 15 dont la sortie est reliée, d'une part à la liaison multiplex LM via une porte OU PO, d'autre part à une entrée du multiplexeur via un circuit de calcul de parité à l'émission CPE délivrant un élément binaire (eb) de parité.

L'alarme en provenance de la base de temps BTM est transmise sur la liaison LM via un détecteur DFBT et la porte PO, ladite alarme forçant à l'état 1 tous les éléments binaires transmis sur LM.

On économise ainsi une liaison par module, ce qui diminue de façon appréciable de la densité du réseau des liaisons d'alarmes RLA.

La figure 4 montre la disposition des circuits de regroupement des liaisons d'alarmes à l'intérieur d'un circuit d'accès CA aux dispositifs de prétraitement. Un multiplexeur RLC regroupe les liaisons continues LCj à LCu. Un multiplexeur RLM regroupe les liaisons multiplex LMj à LMu. La sortie du multiplexeur RLC attaque l'entrée ace d'un multiplexeur RSM de regroupement de signaux multiplexés d'alarmes et la sortie du multiplexeur RLM attaque l'entrée ame dudit multiplexeur RSM dont une troisième entrée ai reçoit les alarmes internes au circuit d'accès et provenant d'un circuit de multiplexage d'alarmes CMX identique à celui d'un module de défense (fig. 3). Le multiplexeur RSM délivre ainsi en sortie LMR des états échantillonnés sériels indicateurs, à raison d'une alarme par état :

— d'alarmes « hors tension » (HTe) externes au circuit d'accès, c'est-à-dire issues des liaisons LC des modules de défense

— d'alarmes multiplex externes autre que « hors tension » (AMe) issues des liaisons LM desdits modules

— d'alarmes multiplex internes au circuit d'accès (AMi) et autres que « hors tension ».

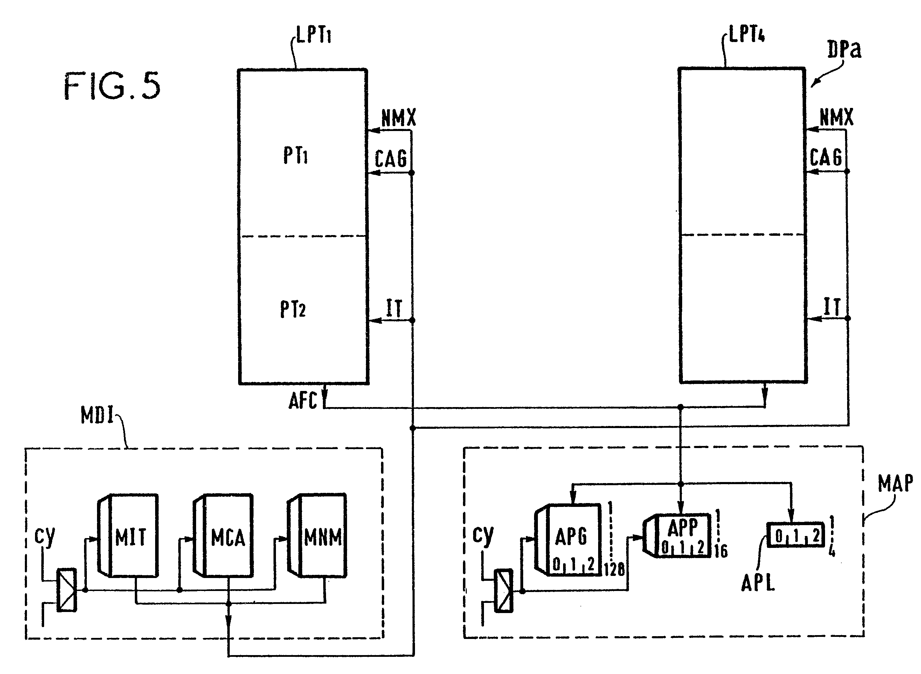

Chaque circuit de prétraitement DPa, DPb (fig. 1 et 2) est organisé en groupes de logiques de prétraitement ayant chacun accès à la logique centrale. Chacun de ces groupes peut comporter jusqu'à quatre cartes de logique de prétraitement LPT1 à LPT4 (fig. 5) ayant accès à des organes communs, à savoir :

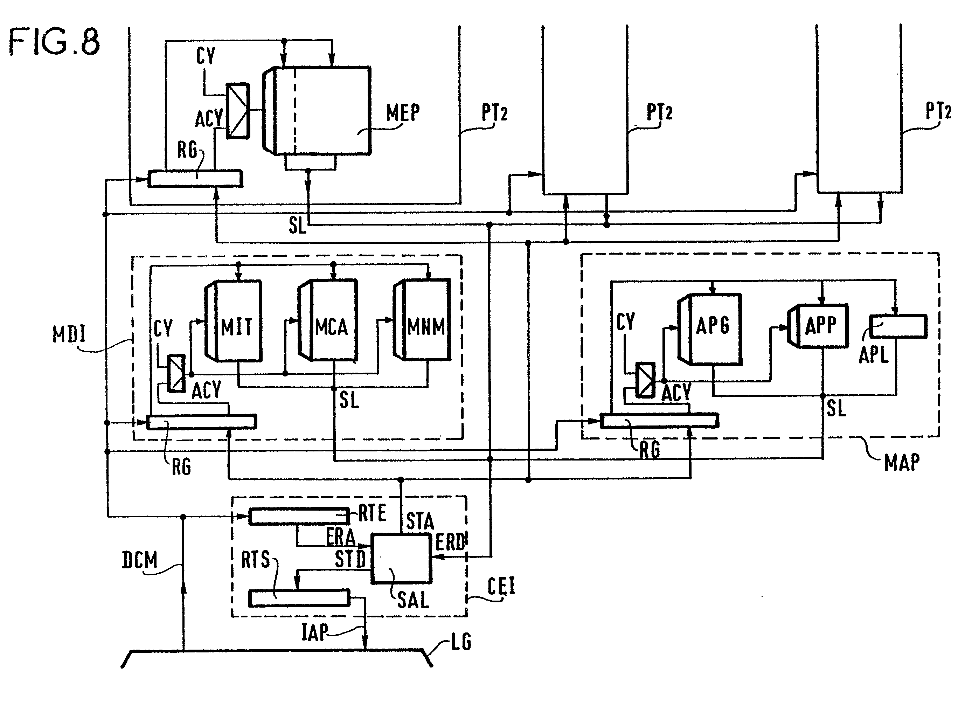

— une mémoire directrice MDI renseignant les logiques LPT sur les numéros et la catégorie des multiplexeurs périphériques transmetteurs des alarmes (figures 5 et 8)

— une mémoire d'appels MAP mémorisant les états confirmés d'alarmes par niveau de priorité fournis par les logiques LPT

— un coupleur d'échange d'informations CEI avec la logique centrale (fig. 8).

La logique de prétraitement LPT1 (fig. 5) comprend deux parties :

— une première partie PT1 réalisant une exploration cyclique d'un groupe de liaisons continues et d'un groupe de liaisons multiplex, un filtrage des signaux logiques provenant d'alarmes hors tension, un

calcul de la réception de l'eb de parité déterminant en cas de réception incorrecte une faute « redondance » dans la réception des signaux de liaisons multiplex, une prise en compte des nouveaux états des alarmes en fonction des numéros de groupes de liaisons et, ou, de la catégorie desdites alarmes,

— une seconde partie PT2 mémorisant les états des alarmes de l'exploration cyclique précédente et les phases de confirmation desdits états.

La figure 5 représente la mémoire directrice MDI et la mémoire d'appels MAP communes aux logiques de prétraitement LPT1 à LPT4 et leurs circuits de liaison en mode de travail cyclique. La mémoire directrice et la mémoire d'appels sont adressées cycliquement en synchronisme par la base de temps (liaisons CY).

La mémoire directrice MDI comporte trois blocs-mémoire MNM, MCA, MIT de même capacité (512 mots), chaque bloc mémoire ayant un mot de même rang adressé en lecture pendant chaque groupe de 16 états d'alarmes reçus par les logiques LPT.

Le bloc-mémoire de numéros multiplex MNM délivre, par les liaisons NMX à la première partie de prétraitement PT1 des logiques LPT le numéro du multiplexeur MEX d'un périphérique (module de défense) en train d'émettre des états d'alarmes vers l'une desdites logiques. Le bloc mémoire MCA de catégories délivre par les liaisons CAG la catégorie à laquelle appartient le groupe de 16 eb sériels transmis par ledit multiplexeur.

Le bloc-mémoire MIT d'inhibition de traitement délivre un mot mémorisé d'inhibition de traitement à la logique de décision de la seconde partie de prétraitement PT2 si ce mot lui a été préalablement signifié par la logique centrale.

Les secondes parties PT2 des logiques de prétraitement délivrent pour les états confirmés d'alarmes des appels de fin de confirmation (assortis d'un niveau de priorité) sur les liaisons AFC.

Ces appels de niveau sont mémorisés dans une mémoire d'appels MAP sur trois blocs mémoire de capacités différentes :

— un bloc-mémoire APG d'une capacité de 128 mots mémorisant les états confirmés d'alarmes par niveau de priorité 0,1 ou 2 et par groupe de 16 alarmes, l'état confirmé d'alarme étant mémorisé dans un des 128 mots représentatifs des groupes de 16 eb d'alarmes

— un bloc-mémoire APP de 16 mots, chaque mot mémorisant un état confirmé d'alarmes par niveau de priorité et dans un paquet de 8 groupes de 16 alarmes

— un bloc-mémoire APL de 4 mots, chaque mot mémorisant un état confirmé d'alarme par logique LPT.

Cette structure permet une recherche rapide, par la logique centrale des coordonnées des états confirmés d'alarmes.

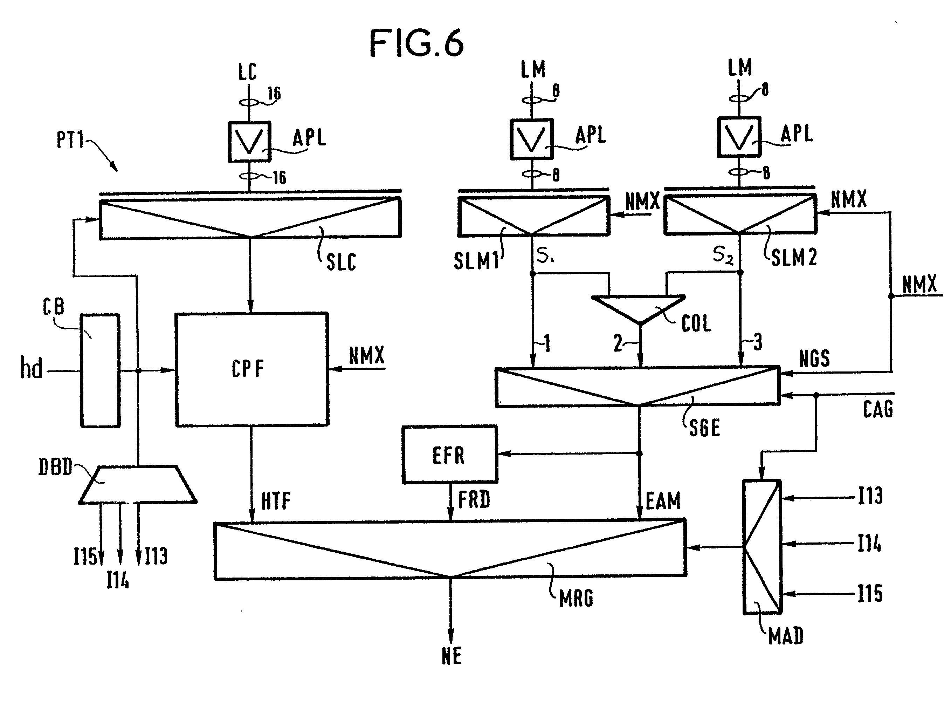

La figure 6 représente les circuits de la première partie du prétraitement PT1 d'une logique de prétraitement LPT1 et les commandes de la mémoire directrice MDI commune à un groupe de logiques de prétraitement.

Les liaisons continues et multiplex issues des modules de défense du réseau de connexion sont reliées par groupes de 16 aux entrées des logiques de prétraitement à raison d'un groupe de 16 liaisons LC bifilaires indicatrices d'alarmes hors tension à raison d'une alarme par paire de liaisons et de 16 liaisons LM bifilaires d'alarmes multiplexées. Les liaisons bifilaires sont transformées en liaisons unifilaires moitié moins nombreuses via des amplificateurs différentiels APL. Un groupe de 16 liaisons LC de signaux continus d'alarmes hors tensions est relié aux entrées d'un multiplexeur SLC sélecteur de liaisons continues. Deux sous-groupes de 8 liaisons d'alarmes multiplexées LM sont respectivement reliées aux entrées d'une paire de multiplexeurs SLM1 et SLM2 sélecteurs de liaisons multiplex LM.

Les liaisons d'entrée des multiplexeurs SLM1, SLM2 sont groupées par 16 et sélectionnées par les liaisons NMX de la mémoire directrice MDI en fonction des numéros des liaisons multiplex des périphériques émetteurs (modules de défense et circuits d'accès) introduits dans ladite mémoire.

Les sorties S1 et S2 des multiplexeurs SLM1 et SLM2 sont reliées respectivement aux entrées 1 et 3 d'un multiplexeur SGE sélecteur de groupe d'états sériels d'alarmes et à l'entrée 2 dudit multiplexeur via un circuit logique OU COL. Ainsi en fonction du numéro NMX une liaison multiplex parmi 16 est sélectionnée en entrée 1 ou 3 de SGE selon qu'elle est située dans le premier ou le second paquet de 8 liaisons raccordé sur SLM1 et SLM2. Le circuit OU COL permet de sélectionner en entrée 2 du multiplexeur SGE une liaison multiplex de l'un ou l'autre circuit d'accès dans l'un ou l'autre des 2 paquets de 8 liaisons lorsqu'une transmission synchrone est effectuée sur une liaison de même rang de chaque paquet. Il s'agit alors d'une liaison multiplex porteuse d'alarmes secondaires, c'est-à-dire issues d'un module de défense dit secondaire et transitant simultanément par les 2 circuits d'accès dits modules de défense primaires.

Le multiplexeur sélecteur de groupe d'états multiplexés sériels d'alarmes SGE est adressé par les liaisons NGS dérivées de NMX, lesdites liaisons donnant le poids fort du n° de liaison multiplex et désignant un groupe d'états multiplexés d'alarmes, ledit adressage tenant compte de la catégorie dudit groupe désignée par les liaisons CAG de la mémoire directrice MDI.

Les catégories de groupes d'éléments binaires sont définies comme suit. Les circuits multiplex des modules de défense et des circuits d'accès ont une capacité modulaire de transmission d'éléments binaires (indicateurs d'alarmes ou non suivant leur état logique), par groupe de 16 éléments binaires (eb).

4

En supposant que le nombre d'alarmes AL transmises par un module de défense soit supérieur à la capacité du premier multiplexeur, un second multiplexeur de 16 entrées (non représenté) sera affecté audit module, la sortie dudit multiplexeur étant reliée directement à la liaison multiplex LM (fig. 3). via la porte PO. Le multiplexeur MEX, travaillant en association avec le circuit de calcul de parité CPE et avec le détecteur de faute de la base de temps DFBT, est qualifié « principal » ainsi que le groupe de 16 eb qu'il transmet, car ledit groupe peut indiquer une faute base de temps laquelle a une importance majeure à être identifiée car elle perturbe les états des éléments binaires indicateurs d'alarmes AL provenant des voies MIC.

Le multiplexeur RLC du circuit d'accès (fig. 4) est également à 16 entrées et les groupes sériels de 16 eb transmetteurs d'alarmes « hors tension » multiplexées sont également catalogués « groupes principaux ». Les groupes principaux de 16 eb sont affectés d'un code de catégorie 0 ou 2 selon qu'ils sont émis par un circuit d'accès ou par un module de défense.

Les multiplexeurs adjoints au multiplexeur MEX et transmetteurs uniquement de groupes de 16 eb d'alarmes issues des voies MIC, c'est-à-dire autres que les alarmes « Faute base de temps » et « hors tension » sont affectés d'un code de catégories 1 ou 3 selon qu'ils sont émis par un circuit d'accès ou par un module de défense.

Un compteur binaire par 16 CB (fig. 6) commandé par les signaux hd de la base de temps explore successivement les entrées du multiplexeur SLC à raison d'un cycle de 16 microsecondes toutes les 2 millisecondes et pilote en synchronisation un circuit de préfiltrage CPF relié à la sortie du multiplexeur SLC. Le circuit CPF a pour but de confirmer les alarmes hors tension multiplexées en sortie du multiplexeur SLC, en introduisant une temporisation de 4 fois 2 millisecondes validant lesdites alarmes par recouvrement des rebondissements de contacts des relais de détection.

Le circuit de préfiltrage CPF est constitué d'une mémoire de 16 mots de 3 eb. Un premier eb désigne l'état hors tension « filtré » c'est-à-dire mémorisé et les deux autres eb désignent le nombre d'explorations (4 maximum) effectuées par le compteur CB à raison d'une exploration de 16 microsecondes toutes les 2048 microsecondes. A chaque exploration, le nouvel état d'une liaison d'alarme hors tension est comparé à l'ancien état par un circuit à portes logiques et réinjecté via un registre tampon dans le mot correspondant de la mémoire. Celle-ci est adressée en fonction du multiplexeur périphérique transmetteur désigné par les liaisons NMX.

Un multiplexeur de regroupement MRG recueille les états filtrés des alarmes hors tension du circuit de préfiltrage (liaison HTF), les états d'alarmes multiplex EAM délivrés en sortie du multiplexeur SGE et les fautes redondance FRD générées par un circuit d'élaboration de faute redondance EFR contrôlant en réception les éléments binaires de parité transmis par les modules de défense.

Le multiplexeur MRG est adressé via un multiplexeur d'adressage MAD validé en fonction de la catégorie du groupe des états binaires sériels dont la transmission est en cours (liaison CAG).

Le multiplexeur MAD reçoit d'un décodeur binaire décimal DBD commandé par le compteur binaire CB les instants de temps i13 et i15 (liaisons I13 et I15) permettant d'injecter respectivement les états hors tension et les fautes redondance. Les états des autres alarmes multiplexées présentés en EAM sont délivrés en sortie NE de MRG durant les instants de temps i0 à i12 ou i0 à i15 selon la catégorie du groupe d'états binaires.

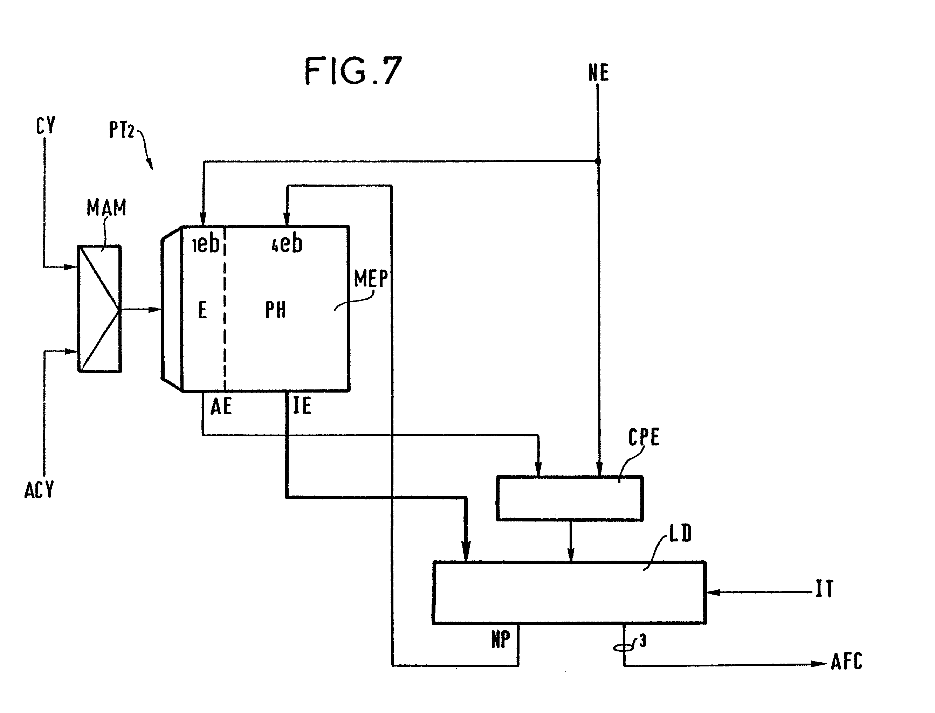

La logique de prétraitement PT2 dont les circuits sont représentés figure 7 permet de confirmer les alarmes après élaboration de nombres de phases de temporisation variant en fonction des catégories d'alarmes. Elle comporte une mémoire MEP d'association état-phase de 2048 mots répartis en 128 groupes de 16 mots, chaque mot comportant un eb indiquant l'ancien état AE d'alarme ou de non alarme au cours de l'exploration précédente de la mémoire et 4 eb indiquant les situations ou phases précédentes dudit état à savoir une phase repos ou phase initiale à partir de laquelle l'état d'alarme va être confirmé au bout d'un nombre de phases de confirmations ou cycles-mémoire fonction de la catégorie du groupe d'éléments binaires sériels traité et du type d'alarme.

La mémoire MEP est adressée cycliquement par la base de temps (liaison CY) via un multiplexeur d'adressage mémoire MAM dont l'adressage est synchrone de celui des multiplexeurs des modules. Les états d'alarmes sélectionnés par la logique PT1 sont introduits par la liaison NE (nouveaux états) d'une part, dans la zone E des états d'alarmes de la mémoire MEP, d'autre part, dans un comparateur d'états CPE, lequel reçoit en sortie AE de la zone E, l'état ancien mémorisé précédemment. Le résultat de la comparaison est transmis à une logique de décision LD ainsi que le numéro de la phase d'exploration initiale de la mémoire ou celui de la phase d'exploration en cours (liaison IE). En fonction de ces éléments, la logique de décision LD introduit le numéro de la phase d'exploration suivante dans la zone PH des phases de la mémoire MEP (sortie NP de LD) et délivre ou non un appel de fin de confirmation (liaison AFC) lorsque la dernière phase d'exploration lui a été transmise.

La logique de décision LD décerne aux appels de fin de confirmation un niveau de priorité de traitement qui est fonction du type des alarmes : hors tension (HT), faute base de temps (FBT), faute redondance (FRD) et de leur origine : module de défense primaire et/ou secondaire.

La logique de décision LD est constituée de 2 boîtiers de circuits intégrés à éléments de mémoire programmable d'une capacité de 256 mots de 4 eb, l'un desdits boîtiers contenant les différentes phases et l'autre les niveaux de priorité de traitement des appels.

Le tableau ci-après résume le classement des alarmes et leur traitement de confirmation. Les modules de défense MD sont répertoriés en modules de défense primaires MDP formant les circuits d'accès et en modules de défense secondaires MDS émettant les alarmes issues des commutateurs vers les dispositifs de prétraitement via lesdits modules de défense primaires.

| MD | GES | CAT | TA | PHI | CEM | NA | IT |
|---|---|---|---|---|---|---|---|
| MDP | GP | 0 | HT | 3 | 1 | | |
| | | | FBT | 2 | 2 | 0 | 3 |
| | | | FRD | | | | |
| | | | AA | 0 | 5 | 2 | 2 |
| | AG | 1 | | | | | |
| MDS | GP | 2 | HT | 1 | 4 | 1 | 3 |
| | | | FBT | | | | |
| | | | FRD | | | | |
| | | | AA | 0 | 5 | 2 | 1 |
| | AG | 3 | | | | | |

MD : Module de défense
GES : Groupe d'eb sériels
CAT : Catégorie de groupe d'eb
TA : Type d'alarmes
AG : Autres groupes
PHI : Phase initiale
CEM : Cycles d'exploration mémoire
NA : Niveau d'appel
IT : Inhibition de traitement
AA : Autres alarmes

Les modules de défense primaires et secondaires délivrent des signaux d'alarmes sous forme de groupes d'éléments binaires sériels GES de 16 eb. Le premier groupe de 16 eb est dit groupe principal GP car il est porteur, au niveau du dispositif de prétraitement PT, de trois alarmes dites principales HT, FTB, FRD parmi les autres alarmes AA issues des commutateurs des voies MIC du réseau de connexion.
Parmi les types d'alarmes TA, on distingue :
— l'alarme « hors tension » HT
— l'alarme « faute base de temps » FBT
— l'alarme « faute redondance » FRD
— les alarmes AA autres que HT, FBT et FRD.
Le groupe principal GP d'éléments binaires sériels GES d'un module de défense primaire est affecté de la catégorie (CAT) 0 et les autres groupes AG porteurs d'alarmes AA autres que principales sont distingués par la catégorie 1. Le groupe principal GP d'eb d'un module de défense secondaire est affecté de la catégorie 2 et les autres groupes sont distingués par la catégorie 3.
A chaque type d'alarme primaire ou secondaire est associé dans la logique de décision LD un numéro

6

de phase initiale PHI, un nombre de cycles ou phases d'exploration mémoire CEM de la mémoire états phases MEP et un niveau d'appel ; on distingue trois niveaux d'appel 0, 1 et 2, le niveau 0 étant le plus prioritaire et le niveau 2 le moins prioritaire. En fin de confirmation de l'état d'alarme, la logique de décision LD présente ainsi un appel sur un fil 0, 1 ou 2 de la liaison AFC selon le niveau de priorité dudit appel confirmé.

Les confirmations de changement d'état et les appels correspondants peuvent être inhibés sélectivement par une donnée « inhibition de traitement » IT fournie par la mémoire directrice. Cette donnée s'applique à tout ou partie d'un groupe de 16 eb. Suivant sa valeur elle agit sur :
— les alarmes primaires principales (IT = 3)
— les autres alarmes AA du groupe principal ou des autres groupes (IT = 2)
— les alarmes secondaires principales (IT = 3)
— les autres alarmes AA du groupe principal ou des autres groupes (IT = 1).

16 phases organisées en 4 séquences différentes de traitement régissent la confirmation des états d'alarmes selon les types d'alarmes et leur origine, lesdites séquences étant autonomes et établies par inter-actions mémoire états-phases MEP et logique de décision LD (fig. 7).

Le tableau ci-après donne un algorithme des séquences de confirmation d'alarmes opérées par la seconde partie de la logique de prétraitement.

(Voir Tableau, page 8)

Les 4 séquences SQ1 à SQ4 sont données à titre d'exemple. La séquence SQ1 traite la confirmation des états d'alarmes primaires principales (APP) de type hors tension (HT) affectées du niveau de priorité 0 (NO).

La séquence SQ2 traite la confirmation des alarmes primaires principales du type faute base de temps et faute redondance affectées du même niveau 0.

La séquence SQ3 traite la confirmation des alarmes secondaires principales (ASP) de niveau 1. La séquence SQ4 traite la confirmation des autres alarmes primaires ou secondaires (AAPS) de niveau 2. Le fonctionnement de la logique PT2 figure 7 est expliqué ci-après en application, à titre d'exemple, de la séquence SQ2 développant le traitement en confirmation des alarmes primaires (AP) de niveau de priorité 0 (NO) de types « faute base de temps » et faute redondance (FBT, FRD).

Selon qu'un nouvel état d'alarme apparaît en NE à l'instant de temps i13, i14 ou i15 parmi un groupe de 16 eb sériels transmis aux instants i0 à i15, la mémoire états-phases MEP mémorise ledit état provenant d'une alarme HT, FBT ou FRD et transmet à la logique de décision LD une phase initiale PH fonction de l'origine (module primaire ou secondaire) de l'alarme.

S'il s'agit d'une faute base de temps par exemple, la séquence de confirmation part de la phase initiale 2. Si le nouvel état ne n'est pas différent de l'ancien état ae mémorisé au cycle précédent de la mémoire MEP, la logique de décision LD réintroduit la phase initiale dans ladite mémoire (liaison NP). Si ne est différent de ae et s'il n'y a pas d'inhibition de traitement (IT < 3), la logique de décision transmet un numéro de phase de confirmation, la phase 8 par exemple à la mémoire MEP.

Après un premier cycle mémoire complet, la mémoire MEP a inscrit la nouvelle phase (8) à la place de la phase initiale 2 et entreprend un second cycle mémoire. A la fin dudit cycle le test de comparaison nouvel état ancien état est à nouveau effectué. Si ne n'est pas différent de ae et qu'il n'y a pas d'inhibition de traitement, l'appel de niveau 0 est délivré par LD sur AFC et la phase terminale 11 de la séquence est inscrite en mémoire de phase. S'il n'y a pas d'inhibition de traitement après le lancement de l'appel, celui-ci reste effectif sinon la logique de décision réinitialise le mot mémoire de phase selon la phase initiale 2.

La figure 8 représente les circuits d'échanges d'informations effectuées entre les mémoires MDI, MAP, MEP de l'ensemble de prétraitement et la logique centrale LG, lesdits échanges étant effectués en mode d'adressage acyclique, fenêtre réservée aux interventions ponctuelles demandées par la logique centrale LG.

Les modes d'adressage cycliques et acycliques des mémoires sont étroitement liés, les signaux d'horloge pilotant l'adressage des mémoires étant divisés chacun en deux temps égaux d'une microseconde :

— un temps de travail cyclique où les mémoires et leurs circuits associés effectuent les tâches répétitives et sytématiques d'exploration

— un temps de travail acyclique servant à l'adressage en lecture ou en écriture des mémoires pour ou par la logique centrale.

Les mémoires états-phases MEP des logiques PT2 et les mémoires MAP, MDI communes auxdites logiques sont adressées en mode acyclique par la logique centrale LG via un coupleur d'échanges d'informations CEI, pour lecture ou écriture desdites mémoires par ladite logique centrale.

Le coupleur CEI présente un séquentiel d'adressage et de lecture SAL associé à un registre tampon d'entrée RTE et à un registre tampon de sortie RTS. Le registre RTE et les registres RG des mémoires reçoivent sous forme d'un message série de la logique centrale via une liaison DCM l'adresse acyclique d'une mémoire. Le séquentiel SAL se positionne en fonction de cette adresse reçue sur ses entrées ERA et la communique en parallèle par ses sorties STA à un registre RG de ladite mémoire. Ledit séquentiel peut également opérer une incrémentation d'adresse. Les sorties de lecture SL des mémoires sont reliées à des entrées de réception de données ERD du séquentiel SAL qui explore lesdites sorties. Les données lues sont transférées en parallèle dans le registre RTS par les sorties STD du séquentiel SAL puis en série à la logique centrale LG par une liaison IAP transmettrice des informations d'alarmes prétraitées.

Pour effectuer la lecture de la mémoire MAP, le séquentiel SAL explore en premier lieu un bloc mémoire APL dans lequel se trouve éventuellement mémorisé l'état d'appel des logiques de prétraitement. Il recueille les indications de paquet de groupes et de groupe de blocs APP et APG situant respectivement l'appartenance de l'état confirmé d'alarme ayant sollicité la mémoire d'appel, à un paquet de groupes et à un groupe donné d'éléments binaires sériels, et l'adresse dans le groupe par lecture de MEP, lesdits éléments binaires étant issus d'un multiplexeur périphérique MEX correspondant.

Dans la logique centrale les informations relatives au prétraitement des alarmes sont mémorisées et accessibles au logiciel de l'unité centrale (UC), les états « logiciels » des alarmes correspondant aux états confirmés étant mis à jour par l'unité centrale.

La logique centrale peut inscrire des données dans les mémoires de prétraitement. Pour cela, la logique centrale transmet l'adresse et les données en série sur la liaison DCM dans le registre RG de la mémoire adressée, ledit registre transférant ensuite lesdites données en parallèle sur la ligne mémoire adressée et dans le registre RTE du séquentiel pour effectuer l'incrémentation d'adresse via les sorties STA dudit séquentiel.

Des données « inhibition de traitement » d'un groupe d'alarmes sont ainsi inscrite dans le bloc mémoire MIT à l'adresse d'un multiplexeur périphérique ayant transmis une alarme « Faute base de temps » faute hors tension » ou « faute redondance », lesdites fautes perturbant les états logiques de tout

**0 023 689**

le groupe d'éléments binaires sériels dont les états d'alarmes deviennent non significatifs.

**Revendications**

1. Dispositif de prétraitement d'alarmes, dans un autocommutateur comportant une commande centralisée par calculateurs (UCA, UCB) et des organes répartis en modules de défense (MD) dotés chacun de moyens pour l'émission d'alarmes et dont au moins certains englobent un commutateur temporel ou spatial de voies temporelles (MIC), les alarmes étant affectées chacune d'une catégorie dépendant notamment de son type et de l'organe émetteur et étant regroupées avant transmission à la commande centralisée, par une logique d'échange (LG), caractérisé en ce qu'il comporte :

— des moyens d'émission d'alarmes sous forme multiplexée (MEX) et sous forme continue (DHT) dans chaque module de défense (MD) alimentant respectivement une liaison dite continue (LC) et une liaison dite multiplexée (LM) propres à ce module,

— des moyens de prétraitement des alarmes constituées par au moins deux circuits identiques de prétraitement des alarmes (DPa, DPb) aptes à assurer chacun un regroupement catégoriel d'alarmes, une confirmation et un classement par priorité en vue d'une transmission des alarmes reçues vers l'un ou l'autre des calculateurs (UC) via la logique d'échange (LG) correspondante,

— des moyens redondants de transmission d'alarmes constitués par un réseau (RLA) de liaisons continues (LC) et multiplexes (LM) qui sont multipliées les unes et les autres de manière à relier au moins en double chaque module de défense (MD) à la commande centralisée, via les circuits de prétraitement et les logiques d'échange.

2. Dispositif de prétraitement selon la revendication 1, caractérisé en ce que les moyens d'émission d'alarmes d'un module de défense (MD) comportent :

— un détecteur d'état hors tension (DHT) du module apte à fournir un signal continu d'alarme sur la liaison continue (LC) propre au module,

— un multiplexeur, dit transmetteur, (MEX) piloté par une base de temps (BT) du module pour transmettre sur la liaison multiplex (LM) propre au module les états d'alarme des voies temporelles (MIC) transitant par le module,

— un détecteur de fautes de base de temps (DFBT) relié en sortie de la base de temps (BT) du module et apte à émettre sur la liaison multiplexe (LM) propre au module.

3. Dispositif de prétraitement selon la revendication 1, caractérisé en ce qu'il comporte deux circuits d'accès (CAa, CAb) insérés dans le réseau de liaisons d'alarmes (RLA) et comportant chacun un multiplexeur (RLC) de regroupement de liaisons continues (LC) et un multiplexeur (RLM) de regroupement de liaisons multiplexes (LM) pour une pluralité de modules de défense (MDj, MDu), ainsi qu'un multiplexeur (RSM) de regroupement de signaux multiplexés relié par ses entrées aux sorties des multiplexeurs de regroupement de liaisons (RLC, RLM) du circuit d'accès considéré et par sa sortie multiplexée (SM) aux circuits de prétraitement.

4. Dispositif de prétraitement selon la revendication 3, caractérisé en ce que chaque circuit d'accès comporte un détecteur d'état hors tension (DHT) apte à fournir un signal continu d'alarme sur une sortie (SC) vers les circuits de prétraitement, ainsi qu'un circuit multiplex d'émission d'alarmes internes (CMX) dont la sortie est reliée à une entrée du multiplexeur de signaux multiplexés (RSM) du circuit d'accès.

5. Dispositif de prétraitement selon la revendication 1, caractérisé en ce que chaque circuit de prétraitement (DP) comporte :

— au moins une logique de prétraitement (LPT) assurant par l'intermédiaire de multiplexeurs (SLC, SLM, SGE, MRG) un multiplexage d'alarmes sous forme multiplexée et sous forme continue émanant des circuits d'accès (CA) et de modules de défense (MDe, MDg) non reliés aux circuits d'accès,

— une mémoire directrice (MDI) commune aux logiques de prétraitement (LPT) du circuit de prétraitement et un compteur (CB) par logique de prétraitement pour sélectionner à chaque phase de transmission le groupe d'états binaires sériels fournis par un module de défense via sa liaison multiplexe (LM) et l'état continu fourni par ce module de défense via sa liaison continue (LC),

— une mémoire d'appel (MAP) pour la mémorisation d'états confirmés d'alarme par niveau de priorité qui sont fournis par les logiques de prétraitement d'alarmes.

6. Dispositif de prétraitement selon la revendication 5, caractérisé en ce que chaque logique de prétraitement (LPT) comporte en vue du regroupement catégoriel,

— un multiplexeur de sélection de liaisons continues (SLC) reliée par ses entrées aux liaisons continues (LC) issues des circuits d'accès (CA) et des modules de défense (MDe, MDg) non reliés à ces circuits d'accès, ce multiplexeur (SLC) étant adressé par le compteur (CB) de la logique,

— au moins un multiplexeur de sélection de liaisons multiplexes (SLM) relié par ses entrées aux liaisons multiplexes (LM) issues des circuits d'accès (CA) et des modules de défense (MDe, MDg) non reliés à ces circuits d'accès, ce multiplexeur (SLM) étant adressé par la mémoire directrice (MDI),

— un multiplexeur de regroupement par catégorie d'alarmes (MRG) recevant séparément, notamment les alarmes transmises par les multiplexeurs de sélection (SLC, SLM), ce multiplexeur (MRG) étant adressé sous le contrôle du compteur (CB) de la logique de prétraitement qui le comporte.

7. Dispositif de prétraitement selon la revendication 6, caractérisé en ce que chaque logique de

10

prétraitement (LPT) comporte également :

— un circuit de confirmation des états d'alarme hors-tension (CPF) inséré entre la sortie du multiplexeur de sélection de liaison continues (SLC) et une entrée du multiplexeur de regroupement par catégorie d'alarme (MRG),

— un circuit d'élaboration de signaux de fautes de redondance (EFR) recevant les alarmes transmises par le multiplexeur de sélection de liaisons multiplexes (SLM) et relié par sa sortie à une entrée du multiplexeur de regroupement par catégorie d'alarmes (MRG).

8. Dispositif de prétraitement selon les revendications 6 et 7, caractérisé en ce que chaque logique de prétraitement (LPT) comporte deux multiplexeurs de sélection de liaisons multiplexes (SLM1, SLM2) dont deux entrées de même rang sont reliées aux liaisons multiplexes issues des deux circuits d'accès (CAa, CAb), ces deux multiplexeurs adressés par la mémoire directrice (MDI) de la logique de prétraitement qui les comporte, ayant leurs sorties respectives reliées d'une part à des entrées différentes d'un multiplexeur de sélection de groupe d'états binaires sériels (SGE), d'autre part aux entrées d'un circuit OU logique (COL) dont la sortie est également reliée à une entrée du multiplexeur de sélection de groupe (SGE) qui est adressée conjointement par la mémoire directrice (MDI) et par le compteur (CB) de la logique de prétraitement le comportant et qui est relié par sa sortie à une entrée du multiplexeur de regroupement par catégorie d'alarmes (MRG).

9. Dispositif de prétraitement selon la revendication 7, caractérisé en ce que chaque logique de prétraitement (LPT) comporte de plus pour la confirmation des changements d'états d'alarme :

— une mémoire d'états et de phases (MEP) à exploration cyclique (CY) synchrone de celle des multiplexeurs des modules de défense, ladite mémoire associant un état mémorisé d'alarme à une phase d'exploration dudit état

— un comparateur (CPE) du nouvel état d'une alarme (NE) et de l'ancien état (AE) mémorisé par la mémoire états-phase

— une logique de décision (LD) recevant d'une part, du comparateur d'états l'indication de changement d'état et d'autre part de la mémoire d'états et de phases l'indication de la phase d'exploration initiale ou en cours associée audit état, ladite logique de décision introduisant la phase suivante (NP) d'exploration dans la mémoire d'états et de phases et, en fin de confirmation de l'état mémorisé d'alarme, délivrant un appel selon un niveau de priorité (0, 1, 2) fonction de la nature de l'alarme (alarme principale ou autre alarme) et de son origine primaire (circuit d'accès) ou secondaire (module de défense).

10. Dispositif de prétraitement selon la revendication 5, caractérisé en ce qu'une mémoire directrice (MDI) comporte trois blocs mémoires (MNM, MCA, MIT) adressés cycliquement en synchronisme avec l'adressage des multiplexeurs transmetteurs (MEX) des modules de défense (MD) et consignant respectivement les adresses des multiplexeurs transmetteurs pour le premier bloc mémoire (MNM), les catégories des groupes d'éléments binaires reçus de chaque multiplexeur transmetteur pour le second bloc mémoire (MCA) et des indications d'inhibition de traitement des groupes d'éléments binaires reçus de chaque multiplexeur transmetteur pour le troisième bloc mémoire (MIT).

11. Dispositif de traitement selon la revendication 5, caractérisé en ce que chaque circuit de traitement d'alarmes (DP) comporte un coupleur (CEI) apte à adresser la mémoire d'états et de phases (MEP) de chaque logique de traitement (MPT) ainsi que la mémoire d'appel (MAP) et la mémoire directrice (MDI) du circuit, à partir de données d'adressage acyclique fournie par la logique d'échange (LG) associée au circuit de traitement qui le comporte, ledit coupleur comprenant essentiellement un séquentiel d'adressage et de lecture des mémoires (SAL) ainsi qu'un registre tampon d'entrée (RTE) recevant les adressages fourni par ladite logique d'échange et un registre de sortie (RTS) recevant les données de lecture de la mémoire adressée en vue de leur transmission vers ladite logique d'échange.

## Claims

1. An alarm preprocessing device for use in an automatic switching exchange including a centralized control by computers (UCA, UCB) and components which are distributed in defense moduls (MD) each including means for emitting alarms and at least some of them including a time or a space switch stage for PCM channels, the alarms being each allotted to a category which depends in particular on its type of alarm and on the emitter component, and being regrouped prior to their transmission to the centralized control by an exchange logic (LG), characterized in that it comprises :

— alarm emission means in a multiplex and in a continuous form (MEX and DHT respectively) in each defense modul (MD) which means feed a continuous link (LC) and a multiplexed link (LM) which belong to the modul,

— means for preprocessing alarms consisting of at least two identical alarm preprocessing circuits (DPa, DPb) which are ready to regroup the alarms according to their category, to confirm the alarm and to classify them in an order of priority in view of a transmission of the received alarms to one or the other of the computers (UC) via the corresponding exchange logic (LG),

— redundant alarm transmission means constituted by a network of continuous (LC) and multiplex links (LM) which are both multiple connected in such a way that each defense module (MD) is at least twice connected to the centralized control via the preprocessing circuits and exchange logics.

2. A preprocessing device according to claim 1, characterized in that the alarm emission means of a defense module (MD) comprise :

— a power down state detector (DHT) of the module which is able to deliver a continuous alarm signal on the continuous link (LC) of this module,

— a transmitter multiplexer (MEX) which is triggered by a clockpulse (BT) of the module and which transmits on the multiplex link (LM) belonging to the module the alarm states of the time division PCM channels which transit through the module,

— a detector responsive to faults of the clock generator (DFBT) connected to the output of the clock generator (BT) of the module and adapted to emit signals on the multiplex link (LM) belonging to the module.

3. A preprocessing device according to claim 1, characterized in that it comprises two access circuits (CAa, CAb) which are inserted in the alarm link network (RLA) and which comprise each a regrouping multiplexer (RLC) for the continuous links (LC) and a regrouping multiplexer (RLM) for the multiplex links (LM) for a plurality of defense modules (MDj, MDu), and a multiplexer (RSM) for regrouping the multiplexed signals, the inputs of this multiplexer being connected to the outputs of the link regrouping multiplexers (RLC, RLM) of the respective access circuit, and the multiplexed output (SM) of this multiplexer being connected to the preprocessing circuits.

4. A preprocessing device according to claim 3, characterized in that each access circuit comprises a power down state detector (DHT) which is able to deliver a continuous alarm signal on an output (SC) to the preprocessing circuits, and comprises a multiplex circuit for the emission of internal alarms (CMX) the output of which is connected to an input of the multiplexer of multiplexed signals (RSM) of the access circuit.

5. A preprocessing device according to claim 1, characterized in that each preprocessing circuit (DP) comprises :

— at least one preprocessing logic (LPT) which multiplexes by means of multiplexers (SLC, SLM, SGE, MRG) alarms in a multiplexed and in a continuous manner, which alarms come from the access circuits (CA) and from the defense modules (MDe, MDg) not connected to the access circuits,

— a director memory (MDI) which is commun to the preprocessing logics (LPT) of the preprocessing circuit and a counter (CB) for every preprocessing logic in order to select at each transmission phase the group of serial binary states furnished by a defense module via its multiplex link (LM) and the continuous state furnished by the defense module via its continuous link (LC),

— a call memory (MAP) for storing the confirmed alarm states by their priority level which states are delivered by the alarm preprocessing logics.

6. A preprocessing device according to claim 5, characterized in that each preprocessing LOGIC (LPT) comprises in view of the regrouping according to the category :

— a selection multiplexer of continuous links (SLC), the inputs of which are connected to the continuous links (LC) of the access circuits (CA) and of the defense modules (MDe, MDg) which are not connected to the access circuits, the multiplexer (SLM) being addressed by the counter (CB) of the logic,

— at least on multiplexer for selecting multiplex links (SLM) the inputs of which are connected to the multiplex links (LM) of the access circuits (CA) and of the defense modules (MDe, MDg) which are not connected to these access circuits, the multiplexer (SLM) being addressed by the director memory (MDI),

— a multiplexer for regrouping the alarms according to their catageory (MRG), this multiplexer receiving separately in particular the alarms which are transmitted by the selection multiplexers (SLC, SLM), this multiplexer (MRG) being addressed and controlled by the counter (CB) of the preprocessing logic to which it belongs.

7. A preprocessing device according to claim 6, characterized in that each preprocessing logic (LPT) further comprises :

— a circuit for confirmation of the power down alarm state (CPF) which is included between the output of the multiplexer which selects the continuous links (SLC) and one input of the multiplexer which regroups the alarms according to their category (MRG),

— a circuit signalling redundancy faults conditions (EFR) receiving the alarms which are transmitted by the multiplexer for the selection of multiplex links (SLM), and connected by its output to one input of the multiplexer which regroups the alarms according to the category (MRG).

8. A preprocessing device according to claims 6 and 7, characterized in that each preprocessing logic (LPT) comprises two multiplexers for the selection of multiplex links (SLM1, SLM2) two inputs of even rank of which are connected to the multiplex links issuing from the two access circuits (CAa, CAb), these two multiplexers being addressed by the director memory (MDI) of the preprocessing logic to which it belongs, and their respective outputs being connected on the one hand to different inputs of a multiplexer for the group selection of serial binary states (SGE) and on the other hand to the inputs of a logic OR circuit (COL), the output of which is also connected to one input of the group selection multiplexer (SGE) which is conjointly addressed by the director memory (MDI) and by the counter (CB) of the preprocessing logic to which it belongs and which is connected by its output to an input of the multiplexer for regrouping the alarms according to their category (MRG).

9. A preprocessing device according to claim 7, characterized in that each preprocessing logic (LPT) further comprises in view of the confirmation of the changes of state of alarm :

— A state and phase memory (MEP) which is cyclically scanned (CY) in synchronism with the multiplexers of the defense modules, this memory associating a memorized alarm state to a scan phase of that state,

— a comparator (CPE) for comparing the new alarm state (NE) with the old state (AE) memorized by the state-phase memory,

— a decision logic (LD) receiving on the one hand from the state comparator the indication of state change and on the other hand from the state and phase memory the indication of the original or actual scanned phase which is associated to this state, the decision logic introducing the following scanned phase (NP) into the state and phase memory and delivering at the end of the confirmation of the memorized alarm state a call according to the priority level (0, 1, 2) which depends on the nature of the alarm (principle or other alarm) and on its primary origin (access circuit) or secondary origin (defense module).

10. A preprocessing device according to claim 5, characterized in that a director memory comprises three memory blocks (MNM, MCA, MIT) addressed cyclically and synchroneously with the addressing of the transmitter multiplexers (MEX) of the defense modules (MD) and storing the addresses of the transmitter multiplexers in the first memory block (MNM), the categories of groups of received binary elements of each transmitter multiplexer in the second memory block (MCA) and the indications concerning the inhibition of the processing of groups of received binary elements of each transmitter multiplexer in the third memory block (MIT).

11. A preprocessing device according to claim 5, characterized in that each alarm processing circuit (DP) comprises a coupler (CEI) which is able to address the state and phase memory (MEP) of each processing logic (MPT) as will as the call memory (MAP) and the director memory (MDI) of the circuits on the basis of address data which are delivered acyclically by the exchange logic (LG) associated to the processing circuit to which it belongs, said coupler comprising essentially an addressing and lecture sequence circuit for the memories (SAL) as well as an input buffer register (RTE) which receives the addresses from said exchange logic, and an output register (RTS) receiving the read data from the addressed memory in view of their transmission to the exchange logic.

## Ansprüche

1. Vorrichtung zur Vorverarbeitung von Alarmsignalen in einer Selbstwählanlage, mit einer durch Rechnr (UCA, UCB) gestützten Zentralsteuerung und mit Organen, die in Verteidigungsmoduln (MD) aufgeteilt sind und die Alarmsendemittel aufweisen, wobei mindestens gewisse Organe eine Zeit- oder Raumschaltstufe für PCM-Zeitkanäle umfassen und die Alarmsignale nach Kategorien, die insbesondere vom Alarmtyp und vom sendenden Organ abhängen, unterschieden und vor ihrer Übertragung an die Zentralsteuerung über eine Austauschlogik (LG) zu Gruppen zusammengefaßt werden, dadurch gekennzeichnet, daß die Vorrichtung aufweist :

— Alarmsendemittel in multiplexierter Form (MEX) und in kontinuierlicher Form (DHT) in jedem Verteidigungsmodul (MD), die eine kontinuierliche Verbindung (LC) bzw. eine multiplexierte Verbindung (LM) speisen, die zu jedem Modul gehören,

— Mittel zur Vorverarbeitung der Alarmsignale, bestehend aus mindestens zwei gleichen Alarmvorverarbeitungsschaltkreisen (DPa, DPb), die je in der Lage sind, eine Gruppierung nach Alarmkategorien, eine Bestätigung und eine Einreihung nach der Priorität in Hinblick auf eine Übertragung der empfangenen Alarmsignale an den einen oder anderen Rechner (UC) über die zugeordnete Austauschlogik (LG) vorzunehmen,

— redundante Alarmübertragungsmittel, die aus einem Netz (RLA) kontinuierlicher und multiplexierter Verbindungen (LC bzw. LM) bestehen die beide vielfachgeschaltet sind, so daß jeder Verteidigungsmodul (MD) mit der Zentralsteuerung über die Vorverarbeitungsschaltkreise und die Austauschlogik mindestens doppelt verbunden ist.

2. Vorrichtung zur Vorverarbeitung nach Anspruch 1, dadurch gekennzeichnet, daß die Alarmsendemittel eines Verteidigungsmoduls (MD) aufweisen :

— einen Detektor (DHT), der den spannungslosen Zustand des Moduls entdeckt und ein kontinuierliches Alarmsignal auf der dem Modul eigenen kontinuierlichen Verbindung (LC) liefert,

— einen Übertragungsmultiplexer (MEX), der von einem Basistakt (BT) des Moduls gesteuert wird und auf der Multiplexverbindung (LM) des Moduls die Alarmzustände der durch diesen Modul verlaufenden PCM-Zeitkanäle überträgt,

— einen Detektor (DFBT), der Fehler der Zeitbasis entdeckt und an den Ausgang der zeitbasis des Moduls angeschlossen ist und selbst auf der multiplexierten Verbindung (LM) des Moduls zu senden in der Lage ist.

3. Vorrichtung zur Vorverarbeitung nach Anspruch 1, dadurch gekennzeichnet, daß sie zwei Zugriffsschaltkreise (CAa, CAb) enthält, die in das Alarmverbindungsnets (RLA) eingefügt sind und je einen Gruppierungsmultiplexer (RLC) für die kontinuierlichen Verbindungen (LC) und einen Gruppierungsmultiplexer (RLM) für die multiplexierten Verbindungen (LM) für eine Mehrzahl von Verteidigungsmoduln (MDj, MDu) aufweisen, sowie einen Gruppierungsmultiplexer (RSM) für die multiplexierten

**0 023 689**

Signale, der mit seinen Eingängen an die Ausgänge der Gruppierungsmultiplexer für die Verbindungen (RLC, RLM) des betrachteten Zugriffsschaltkreises und mit seinem multiplexierten Ausgang (SM) an die Vorverarbeitungsschaltkreise angeschlossen ist.

4. Vorrichtung zur Vorverarbeitung nach Anspruch 3, dadurch gekennzeichnet, daß jeder Zugriffsschaltkreis einen Detektor für den spannungslosen Zustand (DHT) aufweist, der in der Lage ist, eine kontinuierliches Alarmsignal über einen Ausgang (SC) an die Vorverarbeitungsschaltkreise zu liefern, sowie einen Multiplexschaltkreis für die Aussendung interner Alarmsignale (CMX), dessen Ausgang an einen Eingang des Multiplexers für multiplexierte Signale (RSM) des Zugriffsschaltkreises angeschlossen ist.

5. Vorrichtung zur Vorverarbeitung nach Anspruch 1, dadurch gekennzeichnet, daß jeder Vorverarbeitungsschaltkreis (DP) aufweist :
— mindestens eine Vorverarbeitungslogik (LPT), die über Multiplexer (SLC, SLM, SGE, MRG) eine Multiplexierung von Alarmsignalen in multiplexierter und kontinuierlicher Form bewirkt, wobei diese Alarmsignale von den Zugriffsschaltkreisen (CA) und von nicht mit den Zugriffsschaltkreisen verbundenen Verteidigungsmoduln (MDe, MDg) stammen,
— einen den Vorverarbeitungs-Logikschaltkreis (LPT) des Vorverarbeitungsschaltkreises gemeinsamen Direktionsspeicher (MDI) und einen Zähler (CB) pro Vorverarbeitungslogik, mit dem in jeder Übertragungsphase die Gruppe von in Reihe auftretenden Binärzuständen, die von einem Verteidigungsmodul über seine Multiplexverbindung (LM) geliefert wird, und der kontinuierliche Zustand, der von diesem Verteidigungsmodul über seine kontinuierliche Verbindung (LC) geliefert wird, ausgewählt wird,
— einen Rufspeicher (MAP) für die Speicherung der bestätigten Alarmzustände gemäß dem Prioritätsgrad, wobei diese Zustände von den Alarmvorverarbeitungs-Logikschaltkreisen geliefert werden.

6. Vorrichtung zur Vorverarbeitung nach Anspruch 5, dadurch gekennzeichnet, daß jede Vorverarbeitungslogik (LPT) hinsichtlich der Gruppierung nach Kategorien aufweist :
— einen Multiplexer für die Auswahl der kontinuierlichen Verbindungen (SLC), der mit seinen Eingängen an die von den Zugriffsschaltkreisen (CA) und den nicht mit diesen Zugriffsschaltkreisen verbundenen Verteidigungsmoduln (MDe, MDg) stammenden kontinuierlichen Verbindungen angeschlossen ist und vom Zähler (CB) der Logik adressiert wird,
— mindestens einen Multiplexer für die Auswahl der multiplexierten Verbindungen (SLM), der mit seinen Eingängen an die von den Zugriffsschaltkreisen (CA) und den nicht an diese Zugriffsschaltkreise angeschlossenen Verteidigungsmoduln (MDe, MDg) stammenden Multiplexverbindungen (LM) angeschlossen ist und vom Direktionsspeicher (MDI) adressiert wird,
— einen Multiplexer für die Gruppierung der Alarmsignale nach Kategorie (MRG), der getrennt insbesondere die von den Auswahlmultiplexern (SLC, SLM) übertragenen Alarmsignale zugeführt erhält und unter Kontrolle des Zählers (CB) der ihn enthaltenden Vorverarbeitungslogik adressiert wird.

7. Vorrichtung zur Vorverarbeitung nach Anspruch 6, dadurch gekennzeichnet, daß diese Vorverarbeitungslogik (LPT) außerdem enthält :
— einen Bestätigungsschaltkreis für die die Spannungslosigkeit anzeigenden Alarmzustände (CPF), der zwischen den Ausgang des Auswahlmultiplexers für die kontinuierlichen Verbindungen (SLC) und einem Eingang des Multiplexers für die Gruppierung nach Alarmkategorie (MRG) eingefügt ist,
— einen Schaltkreis zur Erarbeitung von Redundanzfehlersignalen (EFR), der die von dem Auswahlmultiplexer für die Auswahl der multiplexierten Verbindungen (SLM) übertragenen Alarmsignale zugeführt erhält und ausgangsseitig an einem Eingang des Multiplexers für die Gruppierung nach Alarmkategorie (MRG) führt.

8. Vorrichtung zur Vorverarbeitung nach den Ansprüchen 6 und 7, dadurch gekennzeichnet, daß jede Vorverarbeitungslogik (LPT) zwei Multiplexer für die Auswahl der multiplexierten Verbindungen (SLM1, SLM2) aufweist, von denen zwei Eingänge, gleichen Rangs mit den von den beiden Zugriffsschaltkreisen (CAb, CAb) kommenden multiplexierten Verbindungen verbunden sind, wobei diese beiden Multiplexer von dem Direktionsspeicher (MDI) der ihn enthaltenden Vorverarbeitungslogik adressiert werden und mit ihren jeweiligen Ausgängen einerseits an verschiedene Eingänge eines Multiplexers für die Auswahl der Gruppe von binären Reihenzuständen (SGE) und andererseits an die Eingänge eines logischen ODER-Schaltkreises (COL) angeschlossen sind, dessen Ausgang ebenfalls an einen Eingang des Gruppenauswahlmultiplexers (SGE) angeschlossen ist, wobei dieser Multiplexer zugleich vom Direktionsspeicher (MDI) und vom Zähler (CB) der ihn enthaltenden Vorverarbeitungslogik adressiert wird und mit seinem Ausgang an einem Eingang des Multiplexers für die Gruppierung nach Alarmkategorien (MRG) verbunden ist.

9. Vorrichtung zur Vorverarbeitung nach Anspruch 7, dadurch gekennzeichnet, daß jede Vorverarbeitungslogik (LPT) außerdem für die Bestätigung der Äderungen der Alarmzustände aufweist :
— einen Zustands- und Phasenspeicher (MEP), der zyklisch und synchron (CY) mit den Multiplexern der Verteidigungsmoduln abgetastet wird und einen gespeicherten Alarmzustand einer Abtastphase dieses Zustands zuordnet,
— einen Komparator (CPE) zum Vergleich des neuen Alarmzustandes (NE) und des vom Zustands-Phasenspeicher gespeicherten alten Zustands (AE),
— eine Entscheidungslogik (LD), die einerseits vom Zustands-komparator den Hinweis auf die

14

Zustandsänderung und andererseits vom Zustands- und Phasenspeicher den Hinweis auf die ursprüngliche oder augenblickliche Abtastphase, die diesem Zustand zugeordnet ist, zugeführt erhält, wobei die Entscheidungslogik die nächste Abtastphase (NP) in den Zustands- und Phasenspeicher einführt und nach Bestätigung des gespeicherten Alarmzustandes einen Ruf gemäß einem Prioritätsrang (0, 1, 2) abhängig von der Art des Alarms (Hauptalarm oder anderer Alarm) und von seinem primären Ursprung (Zugriffsschaltkreis) oder sekundären Ursprung (Verteidigungsmodul) absetzt.

10. Vorrichtung zur Vorverarbeitung nach Anspruch 5, dadurch gekennzeichnet, daß ein Direktionsspeicher (MDI) drei Speicherblöcke (MNM, MCA, MIT) aufweist, die zyklisch und synchron mit der Adressierung der Übertragungsmultiplexer (MEX) der Verteidigungsmoduln (MD) adressiert wird und die Adressen der Übertragungsmultiplexer für den ersten Speicherblock (MNM), die Kategorien der von jedem Übertragungsmultiplexer empfangenen Gruppen von Binärelementen für den zweiten Speicherblock (MCA) und Angaben über die Blockierung der Verarbeitung der von jedem Übertragungsmultiplexer empfangenen Gruppen von Binärelementen für den dritten Speicherblock (MIT) bereithält.

11. Vorrichtung zur Vorverarbeitung nach Anspruch 5, dadurch gekennzeichnet, daß jeder Alarmbearbeitungsschalkreis (DP) einen Koppler (CEI) aufweist, der in der Lage ist, den Zustands- und Phasenspeicher (MEP) jeder Verarbeitungslogik (MPT) sowie den Rufspeicher (MAP) und den Direktionsspeicher (MDI) des Schaltkreises ausgehend von unzyklischen Adressierangaben zu adressieren, die von der dem ihn enthaltenden Behandlungsschaltkreis zugeordneten Austauschlogik (LG) geliefert werden, wobei der Koppler im wesentlichen eine Folgesteuerung für die Adressierung und das Auslesen der Speicher (SAL) sowie ein Eingangspufferregister (RTE), das die von der Austauschlogik geliegerten Adressierungen zugeführt erhält, und ein Ausgangsregister (RTS) aufweist, dem die aus dem adressierten Speicher ausgelesenen Daten zu deren Übertragung in Richtung auf die Austauschlogik zugeführt werden.

# FIG.1

FIG.2

0 023 689

# FIG.3

# FIG.4

3

FIG.5

0 023 689

FIG.6

# FIG.7

0 023 689

FIG.8

0 023 689